# EUROPÄISCHE PATENTANMELDUNG

(11) **EP 4 151 085 A1**
(43) Veröffentlichungstag der Anmeldung: **22.03.2023**
(21) Anmeldenummer: 22455001.2
(22) Anmeldetag: 19.09.2022
(51) Int. Cl.: A01J 27/04, G07F 9/10, G07F 11/66, A47F 10/02

(54) **KÄSEAUTOMAT**

(30) Priorität: 20.09.2021 AT 507392021
(71) Anmelder: ErlebnisSennerei Zillertal KG, 6290 Mayrhofen (AT)
(72) Erfinder: KRÖLL, Heinrich, 6290 Mayrhofen (AT); KRÖLL, Christian, 6295 Ginzling (AT)
(74) Vertreter: Torggler & Hofmann Patentanwälte - Innsbruck

(57) **Zusammenfassung**

Käseautomat zur Ausgabe portionierter Käsestücke, umfassend:
- wenigstens eine Lagervorrichtung (2), welche dazu ausgebildet ist, wenigstens einen Käse in einer Lagerposition aufzunehmen und/oder zu lagern und
- wenigstens eine Ausgabevorrichtung (3), welche dazu ausgebildet ist, den wenigstens einen Käse aus der Lagerposition in eine Entnahmeposition zur Entnahme durch einen Bediener zu bringen,
wobei wenigstens eine Schneidvorrichtung (4) vorgesehen ist, wobei durch die wenigstens eine Schneidvorrichtung (4) vom wenigstens einen durch die wenigstens eine Lagervorrichtung (2) aufgenommenen und/oder gelagerten Käse Käseteilstücke abtrennbar sind, welche nach Abtrennung durch die wenigstens eine Ausgabevorrichtung (3) in die Entnahmeposition zur Entnahme durch einen Bediener bringbar sind.

## Beschreibung

Die vorliegende Erfindung betrifft einen Käseautomat zur Ausgabe portionierter Käsestücke gemäß dem Oberbegriff des Anspruchs 1.

Gattungsgemäße Käseautomaten umfassen:
- wenigstens eine Lagervorrichtung, welche dazu ausgebildet ist, wenigstens einen Käse in einer Lagerposition aufzunehmen und/oder zu lagern und
- wenigstens eine Ausgabevorrichtung, welche dazu ausgebildet ist, den wenigstens einen Käse aus der Lagerposition in eine Entnahmeposition zur Entnahme durch einen Bediener zu bringen.

Bei entsprechenden Käseautomaten des Standes der Technik ist es bekannt, dass (ähnlich wie bei Snack- oder Getränkeautomaten) portionierte, abgepackte Verkaufspakete in Lagervorrichtungen des Verkaufsautomaten angeordnet sind.

Durch einen Bediener kann zumeist über ein Bedienelement eine entsprechende Verkaufseinheit ausgewählt werden, welche anschließend aus der Lagerposition (zumeist im freien Fall) in eine Entnahmeposition fällt, wobei der Bediener diese abgepackte Verkaufseinheit an Käse der Entnahmeposition entnehmen kann.

Zumeist wird das Bedienelement durch die Eingabe von Geld aktiviert, fordert den Bediener auf, eine gewisse Geldsumme in den Käseautomaten einzuwerfen oder das Bedienelement kann dazu ausgebildet sein, einen Betrag über eine EC-Karte, Debitcard, Bankomatkarte oder Kreditkarte abzubuchen. Nachteilig an bekannten Ausführungsvarianten des Standes der Technik ist jedoch, dass regelmäßig die Haltbarkeit jeder einzelnen Verkaufseinheit überprüft werden muss und gegebenenfalls diese ausgetauscht werden muss. Außerdem entsteht beim Bediener der Eindruck ein vorab gefertigtes Industrieprodukt zu erwerben.

Weiters ist es nicht möglich, die Größe der Verkaufseinheiten bzw. der in den Verkaufseinheiten vorgesehenen Käsestücke frei zu wählen. Lediglich eine Auswahl unterschiedlicher Verkaufseinheiten untereinander ist möglich, jedoch nicht die Portionierung, die Stückgröße oder die Form der Käsestücke.

Aufgabe der vorliegenden Erfindung ist es, einen Käseautomaten bereitzustellen, der zumindest teilweise die aus dem Stand der Technik bekannten, zuvor geschilderten Nachteile verbessert und/oder eine effizientere Ausgabemöglichkeit für Käsestücke darstellt und/oder eine höhere Wahlmöglichkeit bezüglich der Stückgrößen und/oder der Portionen der Käsestücke für den Bediener oder den Endkunden darstellt.

Diese Aufgabe wird erfindungsgemäß durch einen Käseautomat zur Ausgabe portionierter Käsestücke mit den Merkmalen des Anspruchs 1 gelöst.

Erfindungsgemäß ist es vorgesehen, dass ein Käseautomat zur Ausgabe portionierter Käsestücke folgendes umfasst:
- wenigstens eine Lagervorrichtung, welche dazu ausgebildet ist, wenigstens einen Käse in einer Lagerposition aufzunehmen und/oder zu lagern und
- wenigstens eine Ausgabevorrichtung, welche dazu ausgebildet ist, den wenigstens einen Käse aus der Lagerposition in eine Entnahmeposition zur Entnahme durch einen Bediener zu bringen,
wobei wenigstens eine Schneidvorrichtung vorgesehen ist, wobei durch die wenigstens eine Schneidvorrichtung von wenigstens einen durch die wenigstens eine Lagervorrichtung aufgenommen und/oder gelagerten Käse Käseteilstücke abtrennbar sind, welche nach Abtrennung durch die wenigstens eine Ausgabevorrichtung in die Entnahmeposition zur Entnahme durch den Bediener bringbar sind.

Somit ist es gemäß einem Ausführungsbeispiel der Erfindung möglich, direkt vor der Ausgabe über die Entnahmeposition die Käseteilstücke von wenigstens einem Käse (vorzugsweise einem Köse in Block-, Riemen oder Strangform) abzuschneiden und/oder abzutrennen, wobei direkt vor der Ausgabe Größe, Form und/oder Portionsgewicht der Käseteilstücke ausgewählt werden können und individuell durch die wenigstens eine Schneidvorrichtung abgetrennt oder zugeschnitten werden können.

Weiters ist es möglich, dass durch die wenigstens eine Schneidvorrichtung zeitlich direkt vor der Ausgabe an den Bediener Käseteilstücke vom wenigstens einen Käse (-laib) abgetrennt oder abgeschnitten werden, womit ein frisch geschnittener oder abgetrennter Käse bereitgestellt wird. Statt eines vorkonfektionierten Industrieprodukts erhält der Bediener also einen Teil eines Naturprodukts.

Dies birgt außerdem den Vorteil, dass Käse in Blockform, Riemenform oder Käselaibform gelagert werden kann, wobei Käse in Blockform, Riemenform oder Käselaibform eine wesentlich höhere Haltbarkeit als bereits abgepackte, kleine portionierte Käsestücke aufweist.

Weiters ist es nicht mehr nötig, dass jede bereits portionierte Verkaufseinheit regelmäßig auf ihr Ablaufdatum überprüft wird. Es muss nur noch der wenigstens eine Käse bezüglich der Haltbarkeit geprüft werden, was einen wesentlich geringeren Aufwand darstellt.

Im Zuge des vorliegenden Dokumentes ist unter einem Bediener eine Person zu verstehen, welche den Käseautomaten bedient, um zu einem Käseteilstück zu gelangen. Ein solcher Bediener kann bei Ausführungen mit einem Bezahlsystem auch als Kunde, Endkunden oder Käufer bezeichnet werden.

Vorteilhafte Ausführungsformen der Erfindung sind anhand der abhängigen Ansprüche definiert.

Die Kühlvorrichtung kann auch als Temperiervorrichtung ausgebildet sein, wobei es vorgesehen sein kann, dass nicht nur eine Kühlung durch die Kühlvorrichtung gegenüber der Umgebung erfolgt, sondern auch eine Erwärmung.

So kann es beispielsweise vorgesehen sein, dass durch die Kühlvorrichtung im Winter bei einer Umgebungstemperatur unterhalb des Gefrierpunkts von Wasser eine Erwärmung zumindest des Bereichs der wenigstens einen Lagervorrichtung erfolgt, sodass der wenigstens eine in der Lagervorrichtung lagerbarer Käse nicht gefriert.

Vorzugsweise kann es vorgesehen sein, dass wenigstens eine Ent- oder Begasungsvorrichtung vorgesehen ist, welche wenigstens eine Ent- oder Begasungsvorrichtung dazu ausgebildet ist, zumindest einen Bereich der wenigstens einen Lagervorrichtung zu entgasen und/oder mit einer, vorzugsweise CO₂-haltigen, Schutzatmosphäre zu beaufschlagen.

Durch die Entgasung oder die Beaufschlagung durch eine Schutzatmosphäre im Bereich der wenigstens einen Lagervorrichtung kann eine besonders günstige Lagerbedingung für den wenigstens einen Käse geschaffen werden, wobei ein Verderben des wenigstens einen Käse durch Entgasung der Umgebung oder durch Beaufschlagung mit einer Schutzatmosphäre wesentlich entgegengewirkt werden kann und die Haltbarkeit teilweise sogar auf die doppelte Zeitspanne verlängert werden kann.

Weiters kann es vorgesehen sein, dass wenigstens eine Entfeuchtungsvorrichtung vorgesehen ist, welche wenigstens eine Entfeuchtungsvorrichtung dazu ausgebildet ist, zumindest im Bereich der wenigstens einen Lagervorrichtung eine Umgebungsluft zu entfeuchten. Somit kann die relative Luftfeuchtigkeit zumindest im Bereich der Lagervorrichtung minimiert werden.

Durch die Verringerung der relativen Luftfeuchtigkeit im Bereich der wenigstens einen Lagervorrichtung kann die Luftfeuchtigkeit der Umgebung des wenigstens einen Käse reduziert werden, was ein Risiko der ungewollten Schimmelbildung signifikant reduziert.

Es kann vorgesehen sein, dass eine Kühlvorrichtung vorgesehen ist, welche wenigstens eine Kühlvorrichtung dazu ausgebildet ist, zumindest einen Bereich der wenigstens einen Lagervorrichtung und den darin lagerbaren, wenigstens einen Käse auf einer konstanten Temperatur, vorzugsweise einer Temperatur von maximal 10°C, besonders bevorzugt einer Temperatur zwischen 8°C und 10°C, zu halten.

Vorzugsweise ist es vorgesehen, dass wenigstens eine Verpackungsvorrichtung vorgesehen ist, welche wenigstens eine Verpackungsvorrichtung dazu ausgebildet ist, die von der wenigstens einen Schneidvorrichtung abgetrennten Käseteilstücke vor erreichen der Entnahmeposition, vorzugsweise durch ein PET- und/oder Zellulose haltiges, Verpackungsmaterial zu verpacken. Andere Kunststoffe sind im Rahmen der Erfindung als Verpackungsmaterial natürlich auch prinzipiell denkbar.

Weiters kann es vorgesehen sein, dass die wenigstens eine Verpackungsvorrichtung auf das Verpackungsmaterial, welches die Käseteilstücke trägt, Etiketten aufdruckt oder aufklebt, wobei auf den Etiketten beispielsweise Hersteller, Verpackungsdatum, Herstellungsdatum, Inhaltsstoffe, Nährwerte, Allergene, Herkunft und/oder Werbeflächen ersichtlich sind.

Vorzugsweise kann es vorgesehen sein, dass wenigstens eine Anzeigevorrichtung vorgesehen ist, welche wenigstens eine Anzeigevorrichtung dazu ausgebildet ist, für einen Bediener, vorzugsweise visuell, Informationen über den wenigstens einen in der wenigstens einen Lagervorrichtung anordnnbaren Käse darzustellen.

So kann es beispielsweise vorgesehen sein, dass die wenigstens eine Anzeigevorrichtung dazu ausgebildet ist, einem Bediener beim oder vor dem Ausgeben des Käseteilstücks, vorzugsweise mittels eines kurzen Filmes, Informationen über
- den wenigstens einen Käse selbst,
- den Hersteller des wenigstens einen Käse,
- die Inhaltsstoffe des wenigstens einen Käse,
- die Herstellung des wenigstens einen Käse und/oder
- die Herkunft des wenigstens einen Käse
darstellt.

Es kann vorgesehen sein, dass die wenigstens eine Lagervorrichtung dazu ausgebildet ist, vorzugsweise unter Nutzung der auf den wenigstens einen Käse wirkenden Schwerkraft, den wenigstens einen Käse an die wenigstens eine Schneidvorrichtung heranzuführen.

Somit kann es vorgesehen sein, dass durch die wenigstens eine Lagervorrichtung der wenigstens eine Käse an der wenigstens einen Schneidvorrichtung gehalten und/oder nachgeführt wird, sodass die wenigstens eine Schneidvorrichtung kontinuierlich mit dem wenigstens einen Käse in Kontakt steht, sodass der wenigstens eine Käse stets durch die Schneidvorrichtung erreichbar ist und Käseteilstücke abtrennbar und/oder abschneidbar sind.

Vorzugsweise kann es vorgesehen sein, dass die Lagervorrichtung dazu ausgebildet ist, den wenigstens einen Käse in einer Block-, Riemen- und/oder Stangenform aufzunehmen, vorzugsweise wobei wenigstens eine Schneidvorrichtung dazu ausgebildet ist, Käseteilstücke in Scheibenform mit einer variablen Dicke von 0,2 mm bis 25 mm, vorzugsweise von 0,5 mm bis 20 mm, besonders bevorzugt 1 mm bis
20 mm, vom wenigstens einen Käse abzutrennen.

Es kann vorgesehen sein, dass der wenigstens eine Käse in seiner Ausgangsform eine Größe von 65 x 10 x 1 bis 2 cm aufweist.

Auch andere geometrische Formen der Käseteilstücke sind durchaus denkbar. So könnte beispielsweise auch vorgesehen sein, dass die wenigstens eine Schneidvorrichtung blockförmige Käseteilstücke vom wenigstens einen Käse abtrennt.

Auch ein "Abhobeln" oder "Abfräsen" vom wenigstens einen Käse durch die wenigstens eine Schneidvorrichtung ist durchaus denkbar, sodass spanförmige Käseteilstücke entstehen. Solche spanförmigen Käseteilstücke kann beispielsweise für den Verkauf als Pizzakäse und/oder Fonduekäse dienlich sein.

Auch das Vorsehen der Ausgabe von geraspeltem Käse (beispielsweise Parmesan) ist durchaus denkbar, wobei der wenigstens eine Käse durch die wenigstens eine Schneidvorrichtung abgehobelt werden könnte.

Es kann vorgesehen sein, dass die Ausgabevorrichtung wenigstens eine Fördervorrichtung, vorzugsweise eine Förderklappe und/oder ein Förderband, aufweist.

So könnte es beispielsweise vorgesehen sein, dass durch die wenigstens eine Schneidvorrichtung der wenigstens eine Käse direkt an der wenigstens einen Lagervorrichtung bearbeitet wird, wobei Käseteilstücke abgetrennt werden. Diese Käseteilstücke können direkt auf einem Förderband oder einem anderen Fördermittel der wenigstens einen Fördervorrichtung durch die wenigstens eine Schneidvorrichtung gelangen und anschließend über das Förderband oder das Fördermittel in die Entnahmeposition der Ausgabevorrichtung übergeführt werden.

Alternative Fördermittel wären beispielsweise eine Schiebervorrichtung.

Es kann vorgesehen sein, dass die wenigstens eine Schneidvorrichtung wenigstens ein durch einen, vorzugsweise pneumatischen, Aktuator betätigtes Schneidmesser aufweist. Auch Ausführungsvarianten mit hydraulischen und/oder elektrischen Aktuatoren sind durchaus denkbar.

Auch Ausführungsvarianten sind durchaus denkbar, bei welchen die wenigstens eine Schneidvorrichtung einen, vorzugsweise rotatorisch angetriebenen, Käsehobel aufweist, welcher vom wenigstens einen Käse Käseteilstücke abtrennt.

Vorzugsweise ist vorgesehen, dass wenigstens ein Bedienelement vorgesehen ist, welches wenigstens eine Bedienelement durch Eingabe des Bedieners Käseteilstücke in die Entnahmeposition zur Entnahme durch den Bediener zu bringen.

Weiters kann es vorgesehen sein, dass das wenigstens eine Bedienelement eine Bezahleinheit (oder Bezahlsystem) aufweist, wobei das wenigstens eine Bedienelement nach oder vor Auswahl eines Bedieners von Käseteilstücken diesen auffordert, eine Bezahlung einer vorgebbaren Geldsumme vorzunehmen, welche der Bediener beispielsweise über eine Bargeld-Eingabevorrichtung oder eine Erkennungsvorrichtung für EC-, Kredit-, Bankomat- oder Debitkarten entrichten kann.

Das wenigstens eine Bedienelement kann beispielsweise auch als Touch-Screen ausgebildet sein, wobei menügeführt ein Bediener beispielsweise Käsesorten, Mengen, Teilstückgrößen und/oder Form oder Geometrie des Käseteilstückes auswählen kann.

Es kann vorgesehen sein, dass der wenigstens eine Käseautomat ein Gehäuse aufweist, durch welches Gehäuse die wenigstens eine Lagervorrichtung und/oder die wenigstens eine Schneidvorrichtung gegenüber der Umgebung abschirmbar ist.

Vorzugsweise kann vorgesehen sein, dass die wenigstens eine Lagervorrichtung und/oder das wenigstens eine Gehäuse zumindest teilweise transparent ausgebildet ist. Durch eine zumindest teilweise transparente Ausbildung kann ein Einblick für den Bediener in den Käseautomaten gestattet werden, sodass der Bediener eine Funktion oder Bearbeitung der wenigstens einen Schneidvorrichtung und/oder der wenigstens einen Verpackungsvorrichtung beobachten könnte. Eine solche teilweise transparente Ausbildung kann beispielsweise durch Fenster im wenigstens einen Gehäuse oder durch entsprechende Materialwahl umgesetzt werden.

Vorzugsweise ist vorgesehen, dass zumindest eine mit der wenigstens einen Ausgabevorrichtung und/oder der wenigstens einen Schneidvorrichtung und/oder der wenigstens einen Anzeigevorrichtung und/oder der wenigstens einen Verpackungsvorrichtung und/oder der wenigstens einen Ent- oder Begasungsvorrichtung und/oder dem wenigstens einen Bedienelement signalleitend verbundene Steuer- oder Regelvorrichtung vorgesehen ist, welche Steuer- oder Regelvorrichtung dazu ausgebildet ist, die wenigstens eine Ausgabevorrichtung und/oder die wenigstens eine Schneidvorrichtung und/oder die wenigstens eine Anzeigevorrichtung und/oder der wenigstens einen Verpackungsvorrichtung und/oder die wenigstens eine Ent- oder Begasungsvorrichtung und/oder das wenigstens eine Bedienelement zu steuern oder zu regeln.

So kann es beispielsweise vorgesehen sein, dass die Steuer- oder Regelvorrichtung signalleitend mit dem Bedienelement verbunden ist und über das Bedienelement Eingabewerte erhalten kann und/oder an das Bedienelement Auswahlmöglichkeiten senden bzw. an diesem darstellen kann.

Nach erfolgter Eingabe über das Bedienelement kann die Steuer- oder Regelvorrichtung dazu ausgebildet sein, entsprechende Eingabewerte des Bedienelementes zu erhalten und über die signalleitende Verbindung entsprechende Steuer- oder Regelbefehle an die Schneidvorrichtung, die Lagervorrichtung, die Ausgabevorrichtung und/oder die Verpackungsvorrichtung zu übersenden, um einen entsprechenden Wunsch eines Bedieners umzusetzen.

Weitere Einzelheiten und Vorteile der vorliegenden Erfindung werden im Folgenden anhand der Figurenbeschreibung unter Bezugnahme auf die in den Figuren dargestellten Ausführungsbeispiele näher erläutert. Dabei zeigt:
- Fig. 1: ein erstes Ausführungsbeispiel ein erfindungsgemäßen Käseautomaten,
- Fig. 2: ein zweites Ausführungsbeispiel eines erfindungsgemäßen Käseautomaten,
- Fig. 3 - 6: ein Ausführungsbeispiel einer Schneidvorrichtung,
- Fig. 7 und 8: ein weiteres Ausführungsbeispiel einer Schneidvorrichtung,
- Fig. 9 und 10: ein Ausführungsbeispiel eines Käseautomaten, und
- Fig. 11 und 12: ein weiters Ausführungsbeispiel eines Käseautomaten.

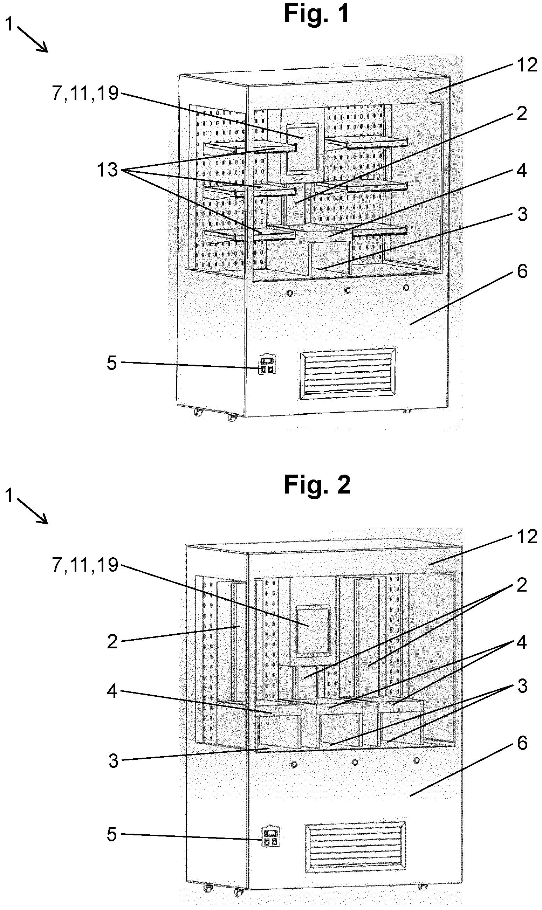

Fig. 1 zeigt ein erstes Ausführungsbeispiel eines Käseautomaten 1 zur Ausgabe portionierter Käsestücke. Diese Käseautomat 1 umfasst wenigstens eine Lagervorrichtung 2, welche dazu ausgebildet ist, einen Käse in einer Lagerposition in Block-, Riemen- und/oder Stangenform aufzunehmen.

Diese Lagervorrichtung 2 des Käseautomaten 1 ist vertikal ausgebildet, sodass der Käse in seiner Block-, Riemen- oder Stangenform vertikal zur Ausgabevorrichtung 3 angeordnet wird, sodass der Käse durch die Schwerkraft aus der Lagervorrichtung 2 zur Schneidvorrichtung 4 befördert wird, wobei durch die Schneidvorrichtung 4 vom Käse Käseteilstücke abtrennbar sind, welche anschließend über die Ausgabevorrichtung 3 in eine Entnahmeposition zur Entnahme durch einen Bediener bringbar sind.

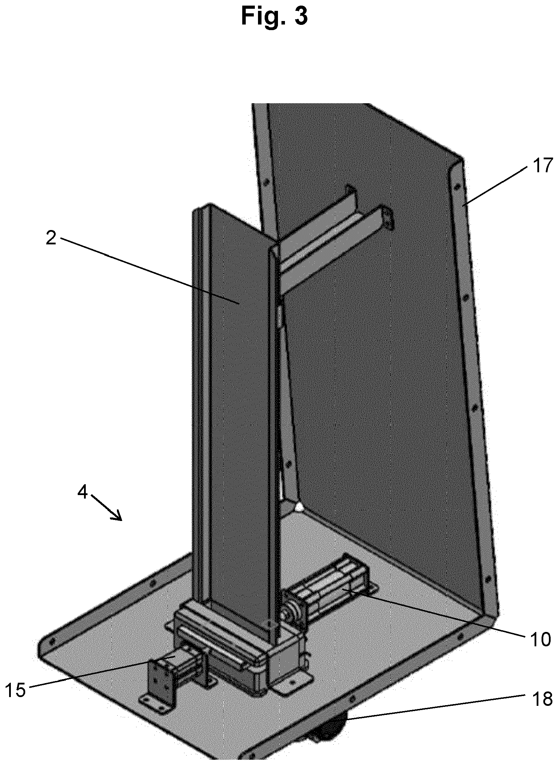

Die Schneidvorrichtung 4 dieses Ausführungsbeispiels ist an dieser Stelle nur schematisch dargestellt, wie auch die Lagervorrichtung 2 und die Ausgabevorrichtung 3. Es sei an dieser Stelle auf die Figuren 3 bis 6 verwiesen, in welchen ein näheres Ausführungsbeispiel der Schneidvorrichtung 2 dargestellt ist.

Der Käseautomat 1 umfasst ein Gehäuse 12, durch welches die Lagervorrichtung 2, die Ausgabevorrichtung 3 und die Schneidvorrichtung 4 von der Umgebung abschirmbar ist, sodass über die Kühlvorrichtung 5 der Inhalt des Käseautomaten 1 temperiert werden kann und vorzugsweise auf einer Temperatur zwischen 8°C und 10°C gehalten werden kann.

Des Weiteren umfasst der Käseautomat 1 eine Ent- oder Begasungsvorrichtung 6, wobei der Käse vorzugsweise in eine CO₂-haltige Schutzatmosphäre gelagert werden kann, sodass die Haltbarkeit des Käses erhöht werden kann.

Der Käseautomat 1 kann über die Bedieneinheit 11 bedient werden, welche in diesem Ausführungsbeispiel durch ein Touchpad umgesetzt ist, welches ebenfalls als Anzeigevorrichtung 7 dient.

Über diese Anzeigevorrichtung 7 kann gegebenenfalls auch ein Werbevideo oder sonstige Informationen über den Käse, den Hersteller, die Inhaltstoffe oder sonstige, essenzielle Informationen bezüglich des Käses für einen Bediener dargestellt werden.

Weiters weist das Ausführungsbeispiel der Fig. 1 des Käseautomaten 1 Ablagevorrichtungen 13 auf, welche dazu ausgebildet sind, Deko oder Käsestücke aufzunehmen, wobei der Käseautomat 1 als Ablage genutzt werden kann.

Fig. 2 zeigt ein zweites Ausführungsbeispiel eines erfindungsgemäßen Käseautomaten 1, welcher im Vergleich zur Fig. 1 drei Lagervorrichtungen 2, Ausgabevorrichtungen 3 und Schneidevorrichtungen 4 aufweist, sodass parallel beispielsweise drei unterschiedliche Käsesorten durch die Lagervorrichtungen 2 aufgenommen werden können, wobei ein Bediener über das Bedienelement 11 die verschiedenen Schneidevorrichtungen 4 mit den unterschiedlichen Käsestücken auswählen kann und somit eine Auswahl treffen kann.

Die verbleibenden Bauteile der Fig. 2 entsprechen dem Ausführungsbeispiel der Fig. 1.

Das Bedienelement 11 der Ausführungsvarianten de Käseautomaten 1 der Fig. 1 und Fig. 2 fungieren als Steuer- oder Regelvorrichtung 19, wobei die Ausgabevorrichtung 3, die Schneidvorrichtung 4, die Anzeigevorrichtung 7, die Ent- oder Begasungsvorrichtung 6 und das Bedienelement 11 somit signalleitend mit der Steuer- oder Regelvorrichtung 19 verbunden sind, welche Steuer- oder Regelvorrichtung 19 dazu ausgebildet ist, die Ausgabevorrichtung 3 und/oder die Schneidvorrichtung 4 und/oder die Anzeigevorrichtung 7 und/oder die Ent- oder Begasungsvorrichtung 6 und/oder das wenigstens eine Bedienelement 11 zu steuern und/oder zu regeln.

So kann es beispielsweise vorgesehen sein, dass die Steuer- oder Regelvorrichtung 19 signalleitend mit dem Bedienelement 11 verbunden ist und über das Bedienelement 11 Eingabewerte erhalten kann und/oder an das Bedienelement 11 Auswahlmöglichkeiten senden und/oder an diesem darstellen kann.

Nach erfolgter Eingabe über das Bedienelement kann die Steuer- oder Regelvorrichtung 19 dazu ausgebildet sein, entsprechende Eingabewerte des Bedienelementes 11 zu erhalten und über die signalleitende Verbindung entsprechende Steuer- oder Regelbefehle an die Schneidvorrichtung 4 und/oder die Ausgabevorrichtung 3 zu übersenden, um einen entsprechenden Wunsch eines Bedieners umzusetzen.

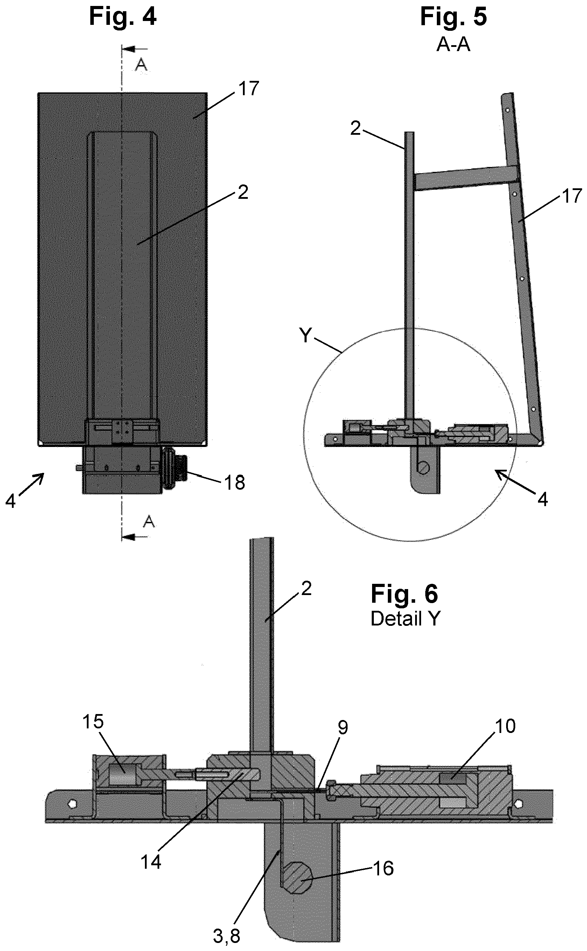

Die Figuren 3 bis 6 zeigen ein Ausführungsbeispiel einer Schneidvorrichtung 4, wobei in Fig. 3 eine perspektivische Darstellung der Schneidvorrichtung 4 gezeigt ist, in Fig. 4 eine Frontalansicht, in Fig. 5 eine Seitenansicht des Schnittes A-A, welcher in Fig. 4 gekennzeichnet ist, und in Fig. 6 die Detailansicht Y der Fig. 5 zu erkennen ist.

Im Folgenden sei auf die Figuren 3 bis 6 verwiesen, wobei durch alle Figuren dasselbe Ausführungsbeispiel der Schneidvorrichtung 4 gezeigt ist und einzelne Details besser erkennbar sind.

So ist zu erkennen, dass ein Käse in Block, Riemen- oder Stangenform über die Lagervorrichtung 2 in einer vertikalen Ausrichtung lagerbar ist.

Dieser Käse kann über die Lagervorrichtung 2 unter Nutzung der Schwerkraft der Schneidvorrichtung 4 zugeführt werden. Wenn der Käse über die Lagervorrichtung 2 der Schneidvorrichtung 4 zugeführt wird, kann über das Halteelement 14 der Käse in einer Position gehalten werden.

Dieses Halteelement 14 wird dabei über einen pneumatischen Aktuator 15 angesteuert und hält den Käse durch Andrücken über das Halteelement 14 an eine gegenüberliegende Seitenwand.

Nach Positionierung des Käses über das Halteelement 14 kann das Schneidmesser 9 der Schneidvorrichtung 4 über den pneumatischen Aktuator 10 angetrieben werden, wobei vom Käse ein Käseteilstück abgeschnitten wird.

Dieses abgeschnittene Käseteilstück fällt anschließend unter Zuhilfenahme der Schwerkraft auf die Ausgabevorrichtung 3.

Diese Ausgabevorrichtung 3 dieses Ausführungsbeispiels ist durch die Förderklappe 8 ausgebildet, wobei anschließend durch Aktivieren der Antriebswelle 16 die Förderklappe 8 rotatorisch angetrieben werden kann, sodass das Käseteilstück über die Ausgabevorrichtung 3 in eine Entnahmeposition zur Entnahme durch den Bediener bringbar ist.

Die Antriebswelle 16 wird durch einen Antriebsmotor 18 angetrieben.

Zur Anordnung, Befestigung oder Positionierung der Schneidvorrichtung 4, der Lagervorrichtung 2 und der Ausgabevorrichtung 3 im Käseautomaten 1 ist die Montagevorrichtung 17 vorgesehen, welche im Käseautomaten 1 beispielsweise durch eine Verschraubung positioniert werden kann.

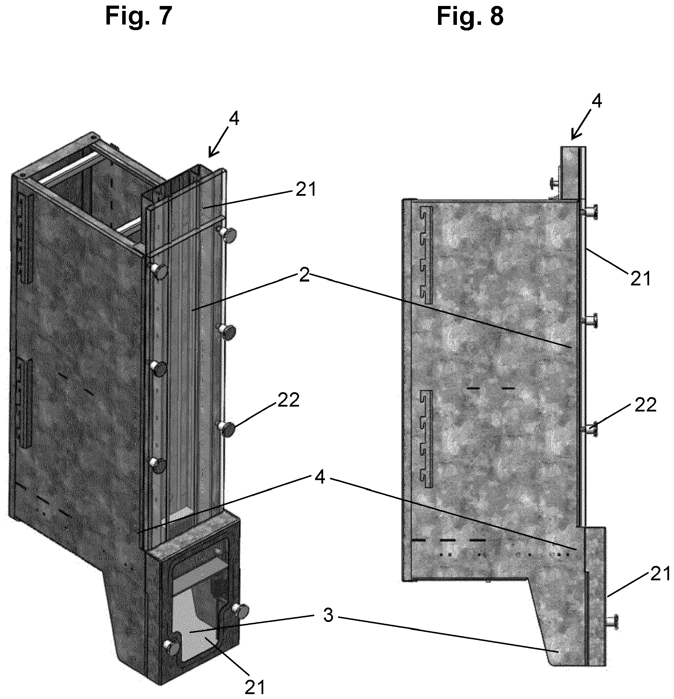

Fig. 7 und Fig. 8 zeigen ein weiteres Ausführungsbeispiel einer Schneidvorrichtung 4 für einen Käseautomaten 1 gemäß eines erfindungsgemäßen Ausführungsbeispiels.

Fig. 7 zeigt dabei eine perspektivische Ansicht des Ausführungsbeispiels der Fig. 8.

Dieses Ausführungsbeispiel weist eine Lagervorrichtung 2 auf, welcher ein Käse in Block-, Riemen- und/oder Stangenform über die Zufuhröffnung 20 zugeführt werden kann.

Dieser über die Zufuhröffnung 20 zugeführte Käse wird mittels der Lagervorrichtung 2 (unter der Nutzung der Schwerkraft) zur Schneidvorrichtung 4 befördert, wobei durch die Schneidvorrichtung 4 vom Käse Käseteilstücke abtrennbar sind, welche anschließend über die Ausgabevorrichtung 3 in eine Entnahmeposition zur Entnahme durch einen Bediener bringbar sind.

Die Ausgabevorrichtung 3 dieses Ausführungsbeispiels nutzt ebenfalls die Schwerkraft, um die Käseteilstücke zu einer Entnahmeposition zu führen.

Um die Lagervorrichtung 2, die Schneidvorrichtung 4 und die Ausgabevorrichtung einfach und schnell zugänglich machen zu können, sind diese über demontierbare Abdeckungen 21 zugänglich.

Dies erlaubt eine einfache und schnelle Demontage oder Zugänglichkeit der Komponenten, welche mit dem Köse oder den Käseteilstücken in Berührung kommen, sodass diese mit dem Käse in Berührung stehenden Komponenten zur Erhöhung der Hygiene schnell und einfach zu reinigen sind.

Die Abdeckungen 21 sind mit von Hand de- oder montierbaren Schraubelementen 22 an der Schneidvorrichtung 4 und/oder Lagervorrichtung 2 angeordnet.

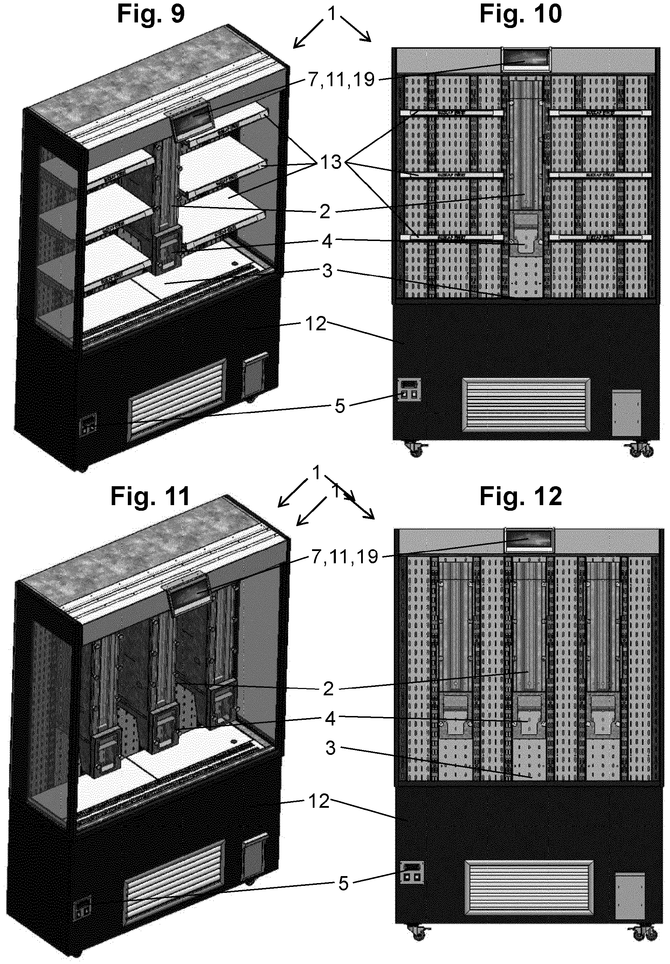

Fig. 9 und Fig. 10 zeigen ein Ausführungsbeispiel eines Käseautomaten 1 mit einer Schneidvorrichtung 3, Lagervorrichtung 4 und Ausgabevorrichtung 3 gemäß Fig. 7 und Fig. 8.

Es stellt dabei die Fig. 9 eine perspektivische Darstellung des in Fig. 10 ausgestellten Käseautomaten dar.

Die verbleibenden Komponenten entsprechen im Wesentlichen denen der Fig. 1 und Fig. 2

Fig. 11 und Fig. 12 zeigen ein Ausführungsbeispiel eines Käseautomaten 1 mit drei Schneidvorrichtung 3, Lagervorrichtung 4 und Ausgabevorrichtung 3 gemäß Fig. 7 und Fig. 8.

Die verbleibenden Komponenten entsprechen im Wesentlichen denen der Fig. 9 und Fig. 10.

### Bezugszeichenliste:

- 1: Käseautomat
- 2: Lagervorrichtung
- 3: Ausgabevorrichtung
- 4: Schneidvorrichtung
- 5: Kühlvorrichtung
- 6: Ent- oder Begasungsvorrichtung
- 7: Anzeigevorrichtung
- 8: Förderklappe
- 9: Schneidmesser
- 10: Aktuator
- 11: Bedienelement
- 12: Gehäuse
- 13: Ablagevorrichtung
- 14: Halteelement
- 15: Aktuator
- 16: Antriebswelle
- 17: Montagevorrichtung
- 18: Antriebsmotor
- 19: Steuer- oder Regelvorrichtung
- 20: Zufuhröffnung
- 21: Abdeckungen
- 22: Schraubelemente

## Patentansprüche

1. Käseautomat zur Ausgabe portionierter Käsestücke, umfassend:
- wenigstens eine Lagervorrichtung (2), welche dazu ausgebildet ist, wenigstens einen Käse in einer Lagerposition aufzunehmen und/oder zu lagern und
- wenigstens eine Ausgabevorrichtung (3), welche dazu ausgebildet ist, den wenigstens einen Käse aus der Lagerposition in eine Entnahmeposition zur Entnahme durch einen Bediener zu bringen, **dadurch gekennzeichnet, dass** wenigstens eine Schneidvorrichtung (4) vorgesehen ist, wobei durch die wenigstens eine Schneidvorrichtung (4) vom wenigstens einen durch die wenigstens eine Lagervorrichtung (2) aufgenommenen und/oder gelagerten Käse Käseteilstücke abtrennbar sind, welche nach Abtrennung durch die wenigstens eine Ausgabevorrichtung (3) in die Entnahmeposition zur Entnahme durch einen Bediener bringbar sind.

2. Käseautomat nach Anspruch 1, wobei eine Kühlvorrichtung (5) vorgesehen ist, welche wenigstens eine Kühlvorrichtung (5) dazu ausgebildet ist, zumindest einen Bereich der wenigstens eine Lagervorrichtung (2) und den darin lagerbaren wenigstens einen Käse auf einer konstanten Temperatur, vorzugsweise einer Temperatur von maximal 10 °C, besonders bevorzugt einer Temperatur zwischen 8 °C und 10 °C, zu halten.

3. Käseautomat nach einem der vorhergehenden Ansprüche, wobei wenigstens eine Ent- oder Begasungsvorrichtung (6) vorgesehen ist, welche wenigstens eine Ent- oder Begasungsvorrichtung (6) dazu ausgebildet ist, zumindest einen Bereich der wenigstens einen Lagervorrichtung (2) zu Entgasen und/oder mit einer, vorzugsweise CO₂-haltigen, Schutzatmosphäre zu beaufschlagen.

4. Käseautomat nach wenigstens einem der vorhergehenden Ansprüche, wobei wenigstens eine Anzeigevorrichtung (7) vorgesehen ist, welche wenigstens eine Anzeigevorrichtung (7) dazu ausgebildet ist, für einen Bediener, vorzugsweise visuell, Informationen über den wenigstens einen in der wenigstens einen Lagervorrichtung (2) anordenbaren Käse darzustellen.

5. Käseautomat nach dem vorhergehenden Anspruch, wobei die wenigstens eine Lagervorrichtung (2) dazu ausgebildet ist, vorzugsweise unter Nutzung der auf den wenigstens einen Käse wirkenden Schwerkraft, den wenigstens einen Käse an die wenigstens eine Schneidvorrichtung (4) heranzuführen.

6. Käseautomat nach wenigstens einem der vorhergehenden Ansprüche, wobei die Lagervorrichtung (2) dazu ausgebildet ist, den wenigstens einen Käse in einer Block-, Riemen- und/oder Stangenform aufzunehmen, vorzugsweise wobei die wenigstens eine Schneidvorrichtung (4) dazu ausgebildet ist, Käseteilstücke in Scheibenform mit einer variablen Dicke von 0,2 bis 25 mm, vorzugsweise 0,5 bis 20 mm, besonders bevorzugt 1 bis 20 mm, vom wenigstens einen Käse abzutrennen.

7. Käseautomat nach wenigstens einem der vorhergehenden Ansprüche, wobei die Ausgabevorrichtung (3) wenigstens eine Fördervorrichtung, vorzugsweise eine Förderklappe (8) und/oder ein Förderband, aufweist.

8. Käseautomat nach wenigstens einem der vorhergehenden Ansprüche, wobei die wenigstens eine Schneidvorrichtung (4) wenigstens ein durch einen, vorzugsweise pneumatischen Aktuator (10) betätigtes, Schneidmesser (9) aufweist.

9. Käseautomat nach wenigstens einem der vorhergehenden Ansprüche, wobei wenigstens ein Bedienelement (11) vorgesehen ist, welches wenigstens eine Bedienelement (11) durch Eingaben des Bedieners Käseteilstücke in die Entnahmeposition zur Entnahme durch den Bediener zu bringen.

10. Käseautomat nach wenigstens einem der vorhergehenden Ansprüche, wobei der wenigstens eine Käseautomat (1) ein Gehäuse (12) aufweist, durch welches Gehäuse (12) die wenigstens eine Lagervorrichtung (2) und /oder die wenigstens eine Schneidvorrichtung (4) gegenüber einer Umgebung abschirmbar ist.

11. Käseautomat nach wenigstens einem der vorhergehenden Ansprüche, wobei zumindest eine mit der wenigstens einen Ausgabevorrichtung (3) und/oder der wenigstens einen Schneidvorrichtung (4) und/oder der wenigstens einen Anzeigevorrichtung (7) und/oder der wenigstens einen Ent- oder Begasungsvorrichtung (6) und/oder dem wenigstens einem Bedienelement (11) signalleitend verbundene Steuer- oder Regelvorrichtung (19) vorgesehen ist, welche Steuer- oder Regelvorrichtung (19) dazu ausgebildet ist, die wenigstens eine Ausgabevorrichtung (3) und/oder die wenigstens eine Schneidvorrichtung (4) und/oder die wenigstens eine Anzeigevorrichtung (7) und/oder die wenigstens eine Ent- oder Begasungsvorrichtung (6) und/oder das wenigstens eine Bedienelement (11) zu steuern und/oder zu regeln.
